# FASCICULE DE BREVET EUROPEEN

(11) **EP 4 146 537 B1**
(45) Date de publication et mention de la délivrance du brevet: **30.10.2024**
(21) Numéro de dépôt: 21723249.5
(22) Date de dépôt: 04.05.2021
(51) Int. Cl.: B64C 25/44, F16D 65/847, F16D 65/78

(54) **ECRAN THERMIQUE POUR DISPOSITIF DE FREINAGE D'UNE ROUE D'AERONEF**
HITZESCHILD FÜR EINE BREMSVORRICHTUNG EINES FLUGZEUGRADS
HEAT SHIELD FOR A BRAKING DEVICE OF AN AIRCRAFT WHEEL

(30) Priorité: 04.05.2020 FR 2004407
(43) Date de publication de la demande: 15.03.2023
(73) Titulaire: Safran Landing Systems, 78140 Vélizy-Villacoublay (FR)
(72) Inventeur: MOLINE, Sylvain, 77550 MOISSY-CRAMAYEL (FR); TARNOWSKI, Yannick, 77550 MOISSY-CRAMAYEL (FR); GAPIN, Arnaud, 77550 MOISSY-CRAMAYEL (FR); HEUDE, Sébastien, 77550 77550 MOISSY-CRAMAYEL (FR)
(74) Mandataire: Cabinet Boettcher
(86) Numéro de dépôt international: PCT/EP2021/061697
(87) Numéro de publication internationale: WO 2021/224239

(56) Documents cités:
- EP-A1- 3 453 614
- EP-A2- 1 618 313
- EP-B1- 1 618 313
- FR-A- 1 439 992
- FR-A1- 2 785 345
- FR-A1- 3 054 524
- FR-B1- 2 785 345

## Description

L'invention concerne le domaine du freinage des roues d'aéronef et plus particulièrement la maîtrise des transferts de chaleur lors des freinages.

### ARRIERE PLAN DE L'INVENTION

Une roue d'aéronef comprend une jante ceinturée par un pneumatique et reliée par un voile à un moyeu central destiné à être monté à rotation sur un essieu, ou fusée, porté par une extrémité inférieure d'une jambe d'atterrisseur de l'aéronef. La roue est équipée d'un frein. Une telle roue est par exemple connue du document FR-A-2990188.

Les freins utilisés pour freiner les roues d'aéronefs comprennent généralement une couronne hydraulique en aluminium présentant des cavités dans lesquelles des actionneurs de freinage sont rapportés. Chacun des actionneurs comporte un piston monté à coulissement étanche selon un axe de coulissement et la couronne comprend des canaux distribuant un fluide hydraulique sous pression vers chacun des actionneurs pour pousser le piston et ainsi appliquer un effort de freinage sur des éléments de friction s'étendant en regard de la couronne. Les éléments de friction comprennent des disques statoriques et des disques rotoriques empilés alternativement sur un tube de torsion coaxial au moyeu de la roue. La couronne est solidaire du tube de torsion par vissage, les disques statoriques étant immobilisés en rotation sur le tube de torsion et les disques rotoriques étant solidaires en rotation de la jante de la roue.

Le dégagement de chaleur consécutif au frottement des disques peut être important, notamment l'énergie à dissiper lors du freinage de l'aéronef est élevée (du fait de la masse et de la vitesse élevée de l'aéronef au moment de l'atterrissage), et entraîner une surchauffe du frein et de son environnement. Si les matériaux constituant la couronne et les actionneurs résistent plutôt bien à cet important dégagement de chaleur, il en est tout autrement du fluide hydraulique circulant dans la couronne pour qui une surchauffe a pour effet de réduire son efficacité mais aussi sa durée de vie. Ces effets ont un impact sur la périodicité du changement du fluide hydraulique, ce qui peut augmenter le temps d'immobilisation au sol de l'aéronef.

Il est connu de disposer une plaque de poussée en métal entre les pistons et la pile de disques pour limiter les échanges thermiques entre le tube de torsion et la couronne. Néanmoins, une telle plaque s'avère peu efficace et induit un ajout de masse important.

Il a également été envisagé d'insérer une pièce en résine phénolique entre le tube de torsion et la couronne pour limiter entre eux les échanges thermiques par conduction. Si une telle pièce s'est avérée légère et efficace, elle ne permet pas de garantir un bon serrage du tube de torsion sur la couronne.

Il existe aussi des écrans thermiques disposés entre la couronne et la pile de disques et s'étendant depuis le tube de torsion jusqu'aux actionneurs. Néanmoins, de tels écrans thermiques ne recouvre que partiellement la face de la couronne tournée vers les disques de sorte que leur efficacité pour protéger la couronne du rayonnement thermique consécutif au frottement des disques est limitée.

Le document FR 2 785 345 A1 divulgue un dispositif à roue et frein pour un avion comprenant un bouclier thermique interposé entre les divers actionneurs de frein et un empilement thermique de frein.

### OBJET DE L'INVENTION

L'invention a donc pour objet de proposer un écran thermique permettant d'obvier au moins en partie aux problèmes précités.

### RESUME DE L'INVENTION

En vue de la réalisation de cet objet, l'invention propose un dispositif de freinage d'une roue d'aéronef comprenant une pile de disques et une couronne ayant une pluralité de cavités dans lesquelles sont rapportés des actionneurs pour exercer un effort de freinage sur la pile de disques s'étendant en regard de la couronne.

Selon l'invention, la couronne est équipée d'un écran thermique s'étendant en regard d'une face de la couronne tournée vers la pile de disques pour protéger ladite couronne d'un rayonnement thermique généré par la pile de disques. L'écran thermique est pourvu d'orifices à travers lesquels s'étendent les actionneurs et présente en section un profil conformé pour réfléchir le rayonnement thermique vers l'extérieur du dispositif.

Le dispositif de freinage selon l'invention est caractérisé en ce que l'écran thermique est maintenu sur la couronne en étant pincé entre la couronne et un tube de torsion sur lequel sont empilés les disques de la pile de disques.

Un tel écran thermique permet de limiter l'élévation en température de la couronne due au dégagement de chaleur généré par le frottement des disques lorsque le frein est en service. Ainsi, lorsque la couronne est agencée pour distribuer un fluide hydraulique sous pression à chacun des actionneurs, l'élévation en température du fluide hydraulique s'en trouve également limitée, ce qui permet de maximiser son efficacité ainsi que sa durée de vie.

Selon une caractéristique particulière, l'écran thermique comporte au moins une portion de surface inclinée par rapport à un axe centrale de la couronne.

De manière particulière, la portion de surface inclinée est incurvée.

De manière particulière, la portion de surface inclinée est plane.

Selon une autre caractéristique particulière, l'écran thermique est d'un seul tenant

Selon une autre caractéristique particulière, l'écran thermique comprend des raidisseurs disposés entre chacun des orifices.

De manière particulière, les raidisseurs sont des nervures embouties.

Selon une autre caractéristique particulière, l'écran thermique est réalisé en un matériau thermiquement isolant.

De manière particulière, une face de l'écran thermique tournée vers la couronne est revêtue d'un matériau à faible émissivité.

Selon une autre caractéristique particulière, l'écran thermique comprend en périphérie un bord tombé s'étendant vers la couronne.

Selon une autre caractéristique particulière, chacun des orifices comprend en périphérie un bord tombé s'étendant vers la pile de disques.

Selon une autre caractéristique particulière, l'écran thermique comprend des portions tubulaires s'étendant depuis un bord des orifices vers la pile de disques pour entourer en partie l'actionneur et le protéger du rayonnement thermique généré par ladite pile de disques.

L'invention concerne également une roue d'aéronef équipée d'un tel dispositif de freinage.

L'invention concerne aussi un train d'atterrissage d'aéronef comprenant au moins une telle roue.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en coupe axiale d'une roue d'aéronef équipée d'un dispositif de freinage selon un mode de réalisation particulier de l'invention ;
- la figure 2 est une vue en perspective de la roue illustrée à la figure 1, montrant la répartition des actionneurs du dispositif de freinage autour de l'axe de rotation de la roue ;
- la figure 3 est une vue en perspective du dispositif de freinage équipant la roue illustrée à la figure 1, dépourvu de la pile de disques de frein ;
- la figure 4 est une vue en perspective de l'écran thermique du dispositif de freinage équipant la roue illustrée à la figure 1 ;
- la figure 5 illustre une première variante de l'écran thermique illustré à la figure 4, dans laquelle le bord tombé en périphérie de l'écran thermique a été rallongé ;
- la figure 6 illustre une deuxième variante de l'écran thermique illustré à la figure 4, dans laquelle le bord tombé équipant les orifices de l'écran thermique a été rallongé.

### DESCRIPTION DETAILLEE DE L'INVENTION

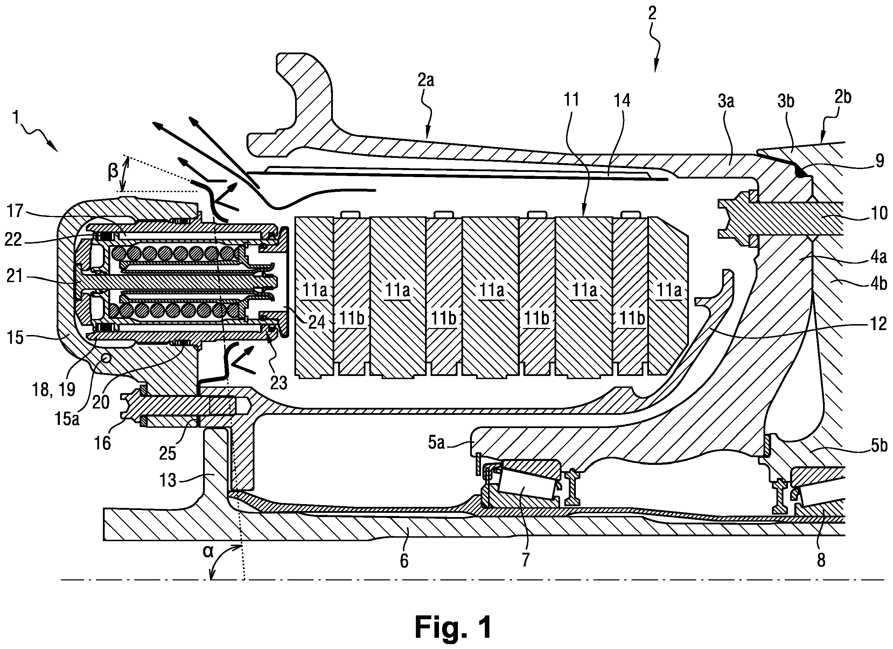

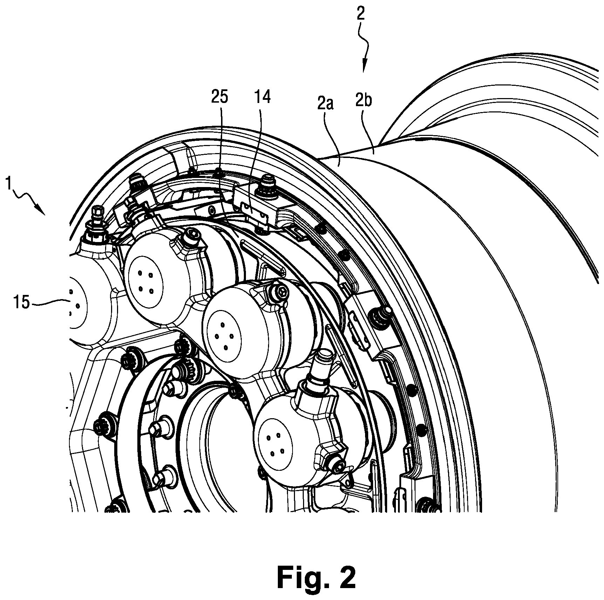

En référence aux figures 1 et 2, l'invention concerne un dispositif de freinage, généralement désigné en 1, équipant une roue 2 d'aéronef.

La roue 2 comprend deux demi-roues 2a, 2b qui comportent chacune une jante 3a, 3b annulaire reliée par un voile 4a, 4b à un demi-moyeu 5a, 5b reçu à pivotement sur un essieu ou fusée 6 au moyen d'un roulement 7, 8. La demi-roue 2a comporte un logement ménagé sur un bord de la jante 3a et dans lequel est agencé un joint d'étanchéité 9 pour que celui-ci soit élastiquement comprimé entre les demi-roues 2a, 2b une fois celles-ci assemblées.

Les demi-roues 2a, 2b sont rapprochées suivant une direction parallèle à un axe X de rotation de la roue 2 et comportent des portées de centrage pour assurer le bon positionnement relatif des demi-roues 2a, 2b. Les demi-roues 2a, 2b sont maintenues en position par des boulons 10 d'assemblage agencés dans des orifices percés en regard dans les voiles 4a, 4b.

De façon connue en soi, les boulons 10 sont vissés et serrés pour assembler les demi-roues 2a, 2b après montage d'un pneumatique (non représenté) sur les jantes 3a, 3b. Dans cette position, le joint d'étanchéité 9 est élastiquement comprimé entre les demi-roues 2a, 2b et empêche ainsi le gaz contenu dans un volume délimité par le pneumatique et les demi-roues 2a, 2b de s'échapper vers l'extérieur de la roue 2.

Le dispositif de freinage 1 comprend des disques 11 de freins, dont des disques stators 11a et des disques rotors 11b, qui sont empilés alternativement les uns contre les autres sur un tube de torsion 12 fixé à une main 13 de l'essieu. Le tube de torsion 12 et la pile de disques 11 s'étendent à l'intérieur de la demi-roue 2a dans un espace annulaire délimité par une surface intérieure de la jante 3a, le voile 4a et une surface extérieure du demi-moyeu 5a s'étendant en regard de la surface intérieure de la jante 3a.

Les disques stators 11a sont fixes en rotation par rapport à l'essieu 6 et les disques rotors 11b comportent des encoches périphériques axiales recevant chacune un tronçon d'une barrette 14 fixée sur la surface intérieure de la jante 3a. Les barrettes 14 s'étendent selon un axe parallèle à l'axe X de rotation de la roue 2 et assurent un couplage en rotation des disques rotors 11b avec la jante 3a autour dudit axe X.

Le dispositif de freinage 1 comprend en outre une couronne 15 hydraulique fixée à une extrémité du tube de torsion 12 au moyen de vis 16. La couronne 15 comprend une pluralité de cavités 17 réparties symétriquement autour de l'axe X de rotation de la roue 2 et reliées entre elles par des canaux 15a. Chacune des cavités 17 reçoit un actionneur 18 exerçant sélectivement un effort de freinage sur la pile de disques 11 via un fluide hydraulique sous pression circulant à l'intérieur de la couronne 15 à travers les canaux 15a.

L'actionneur 18 comporte une chemise 19 globalement cylindrique qui est reçue à étanchéité dans la cavité 17 de la couronne 15. A cet effet, un joint d'étanchéité 20 coopère avec une face externe de la chemise 19 pour contenir le fluide hydraulique dans la cavité 17.

Un piston 21 est monté pour coulisser dans la chemise 19 selon un axe de coulissement parallèle à l'axe X de rotation de la roue 2. A cet effet, une extrémité proximale du piston 21 comporte une protrusion conformée en palier qui s'étend à ajustement contre une face interne de la chemise 19 et qui reçoit un joint d'étanchéité 22. Une extrémité distale de la chemise 19 est conformée en palier pour guider le piston 21 et est munie d'un racleur 23. Une extrémité du piston 21 reçoit un patin 24 pour exercer un appui contre un premier disque stator 11a de la pile de disques 11. La répartition en anneau des actionneurs 18 permet de répartir équitablement l'effort de freinage sur toute la surface du premier disque stator 11a.

Le dispositif de freinage 1 est équipé d'un écran thermique 25 s'étendant entre la couronne 15 et la pile de disques 11 pour protéger ladite couronne 15 du rayonnement thermique engendré par le frottement des disques 11 lors d'un freinage de la roue 2.

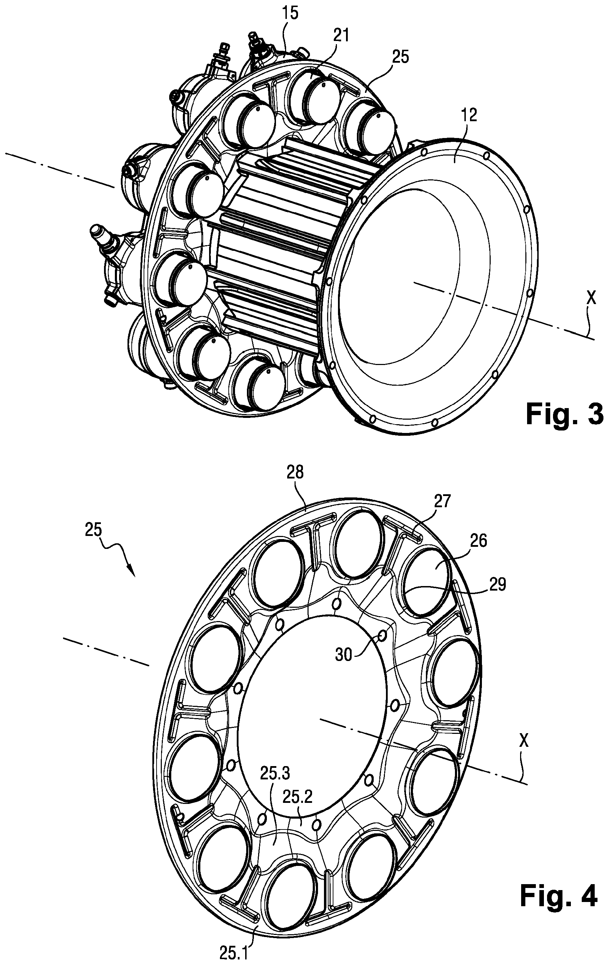

Comme illustré à la figure 3, l'écran thermique 25 est formé d'une tôle d'un seul tenant ayant ici une épaisseur d'environ 0,7 millimètres. L'écran thermique 25 est de forme globalement annulaire. Une portion 25.1 périphérique externe de l'écran thermique 25 s'étend entre le tube de torsion 12 et la jante 3a et a un profil en section présentant une pente α constante par rapport à un axe central de la couronne 15 qui est coaxial à l'axe X. La portion 25.1 comporte des orifices 26 à travers chacun desquels s'étend un des actionneurs 18.

Comme cela est illustré par des flèches, le rayonnement thermique engendré par le frottement des disques 11 se réfléchit sur la portion 25.1 de l'écran thermique 25 en regard, et acquiert, du fait de la pente α, une composante radiale qui provoque un renvoi d'une partie du rayonnement vers l'extérieur de la jante 3a. En outre, la forme évasée de la portion 25.1 provoque un mouvement convectif naturel, vers l'extérieur, de l'air contenu entre les disques et l'écran thermique 25 qui favorise le refroidissement des disques 11.

Afin d'améliorer les performances d'isolation thermique de l'écran thermique 25, la face de la portion 25.1 tournée vers la couronne 15 peut être revêtue d'un matériau à faible émissivité.

En vue de limiter les déformations et les vibrations de l'écran thermique 25, la portion 25.1 de l'écran thermique 25 comporte des raidisseurs 27 répartis symétriquement autour de l'axe X entre chacun des orifices 26. Les raidisseurs 27 sont ici des nervures embouties en forme de « T ».

Par ailleurs, la portion 25.1 comporte en périphérie un bord tombé 28 s'étendant vers la couronne 15 et formant une pente β par rapport à l'axe central de la couronne 15. Le bord tombé 28 est orienté vers la jante 3a et permet de rigidifier l'écran thermique 25 mais aussi de limiter les risques de coupure des opérateurs.

En outre, chacun des orifices 26 comprend en périphérie un bord tombé 29 s'étendant vers la pile de disques 11. Le bord tombé 29 permet d'améliorer la rigidité de l'écran thermique 25 au voisinage des orifices 26.

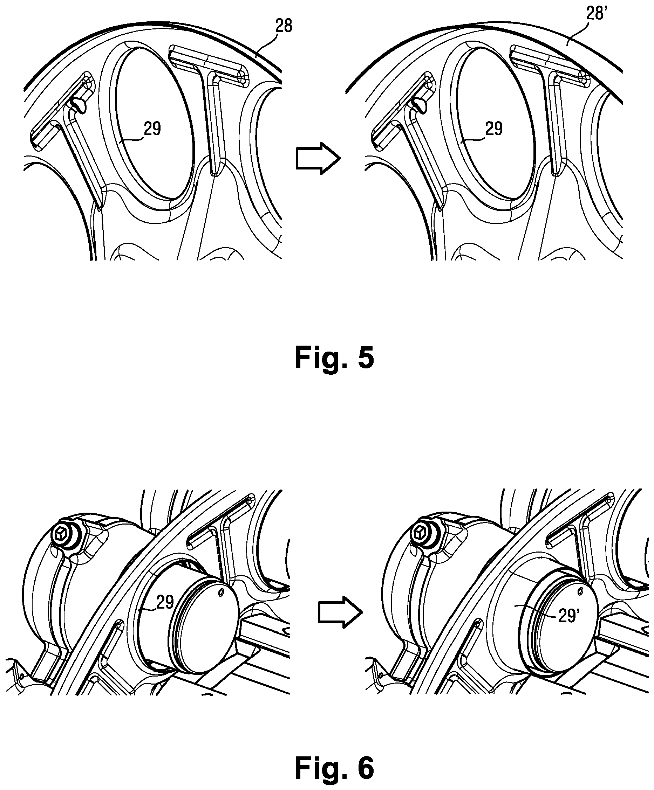

Conformément aux figures 5 et 6, le bord tombé 28 et/ou le bord tombé 29 peuvent être allongés pour former des portions tubulaires 28', 29' permettant respectivement d'améliorer la protection de la couronne 15 contre le rayonnement thermique et d'en protéger en partie les chemises 19 et les pistons 21 des actionneurs 18. Afin de faciliter la réalisation d'un tel écran thermique 25, les portions tubulaires 28', 29' peuvent être formées par une pièce rapportée sur la portion 25.1. L'écran thermique 25 ne sera alors plus d'un seul tenant.

Par ailleurs, l'écran thermique 25 comporte une portion 25.2 périphérique interne pincée entre le tube de torsion 12 et la couronne 15. La portion 25.2 s'étend dans un plan sensiblement orthogonal à l'axe X et comprend des trous 30 de passage des vis 16 de fixation. La portion 25.2 est reliée à la portion 25.1 via une interface de liaison 25.3 de forme globale évasée. La portion 25.2 permet de maintenir en position l'écran thermique dans le dispositif de freinage 1 et de limiter les échanges thermiques par conduction entre le tube de torsion 12 et la couronne 15 (comme illustré par les doubles flèches représentées sur la figure 1).

Afin de limiter encore plus efficacement ces échanges thermiques, on pourra prévoir d'implémenter une rondelle en matériau thermiquement isolant entre la portion 25.2 et la couronne 15, ou de revêtir la portion 25.2 d'un matériau à faible émissivité.

Bien entendu, l'invention n'est pas limitée aux modes de réalisation décrits mais englobe toute variante entrant dans le champ de l'invention telle que définie par les revendications.

La jante peut être en une ou plusieurs pièces.

Bien qu'ici l'écran thermique soit d'un seul tenant, il peut comporter plusieurs pièces, comme par exemple une succession de pétales s'étendant autour de l'axe central de la couronne.

Bien qu'ici les pentes α et β de l'écran thermique soient constantes, elles peuvent être variables de sorte que la face de la couronne tournée vers la pile de disques est de forme incurvée.

En fonction du matériau dans lequel est réalisé l'écran thermique, l'écran thermique peut présenter une épaisseur différente de 0,7 millimètres.

En fonction de l'espace disponible entre la couronne et la pile de disques, il est possible de faire varier la pente α.

L'écran thermique peut être réalisé en un matériau thermiquement isolant comme par exemple en polyétheréthercétone, en liège, en céramique, ou en matériau composite tel que celui à base de matrice céramique verre renforcée par du carbure de silicium et commercialisé sous la marque PyroSic par la société Pyromeral Systems.

Le nombre et les dimensions des orifices dans l'écran thermique peuvent être différents de ceux illustrés.

Le nombre, la forme et l'emplacement des raidisseurs 27 peuvent être différent de ceux illustrés.

## Revendications

1. Dispositif de freinage (1) d'une roue d'aéronef comprenant une pile de disques (11) et une couronne (15) ayant une pluralité de cavités (17) dans lesquelles sont rapportés des actionneurs (18) pour exercer un effort de freinage sur la pile de disques (11) s'étendant en regard de la couronne, la couronne étant équipée d'un écran thermique (25) s'étendant en regard d'une face de la couronne tournée vers la pile de disques pour protéger ladite couronne d'un rayonnement thermique généré par la pile de disques, l'écran thermique étant pourvu d'orifices (26) à travers lesquels s'étendent les actionneurs et présentant en section un profil conformé pour réfléchir le rayonnement thermique vers l'extérieur du dispositif, **caractérisé en ce que** l'écran thermique est maintenu sur la couronne (15) en étant pincé entre la couronne et un tube de torsion (12) sur lequel sont empilés les disques (11) de la pile de disques.

2. Dispositif de freinage (1) selon la revendication 1, dans lequel l'écran thermique (25) comporte au moins une portion de surface inclinée (25.1) par rapport à un axe central de la couronne.

3. Dispositif de freinage (1) selon la revendication 2, dans lequel la portion de surface inclinée (25.1) est incurvée.

4. Dispositif de freinage (1) selon la revendication 2, dans lequel la portion de surface inclinée (25.1) est plane.

5. Dispositif de freinage (1) selon l'une quelconque des revendications précédentes, dans lequel l'écran thermique (25) est d'un seul tenant.

6. Dispositif de freinage (1) selon l'une quelconque des revendications précédentes, dans lequel l'écran thermique (25) comprend des raidisseurs (27) disposés entre chacun des orifices (26).

7. Dispositif de freinage (1) selon la revendication 6, dans lequel les raidisseurs (27) sont des nervures embouties.

8. Dispositif de freinage (1) selon l'une quelconque des revendications précédentes, dans lequel l'écran thermique (25) est réalisé en un matériau thermiquement isolant.

9. Dispositif de freinage (1) selon l'une quelconque des revendications précédentes, dans lequel une face de l'écran thermique (25) tournée vers la couronne est revêtue d'un matériau à faible émissivité.

10. Dispositif de freinage (1) selon l'une quelconque des revendications précédentes, dans lequel l'écran thermique (25) comprend en périphérie un bord tombé s'étendant vers la couronne (15).

11. Dispositif de freinage (1) selon l'une quelconque des revendications précédentes, dans lequel chacun des orifices comprend en périphérie un bord tombé (29) s'étendant vers la pile de disques.

12. Dispositif de freinage (1) selon l'une quelconque des revendications précédentes, dans lequel l'écran thermique (25) comprend des portions tubulaires (29') s'étendant depuis un bord des orifices vers la pile de disques pour entourer en partie l'actionneur et le protéger du rayonnement thermique généré par ladite pile de disques.

13. Roue (2) d'aéronef équipée d'un dispositif de freinage (1) selon l'une quelconque des revendications précédentes.

14. Train d'atterrissage d'aéronef comprenant au moins une roue selon la revendication 13.

## Patentansprüche

1. Bremsvorrichtung (1) für ein Luftfahrzeugrad, die einen Scheibenstapel (11) und einen Kranz (15) mit einer Mehrzahl von Hohlräumen (17) umfasst, in denen Aktoren (18) angebracht sind, um eine Bremskraft auf den Scheibenstapel (11) auszuüben, der sich dem Kranz gegenüberliegend erstreckt, wobei der Kranz mit einem Hitzeschild (25) ausgestattet ist, der sich einer dem Scheibenstapel zugewandten Fläche des Kranzes gegenüberliegend erstreckt, um den Kranz vor einer von dem Scheibenstapel erzeugten Wärmestrahlung zu schützen, wobei der Hitzeschild mit Öffnungen (26) versehen ist, durch welche hindurch sich die Aktoren erstrecken und die im Querschnitt ein Profil aufweisen, das derart ausgebildet ist, dass es die Wärmestrahlung von der Vorrichtung nach außen reflektiert, **dadurch gekennzeichnet, dass** der Hitzeschild auf dem Kranz (15) gehalten wird, indem er zwischen dem Kranz und einem Torsionsrohr (12) eingeklemmt wird, auf dem die Scheiben (11) des Scheibenstapels gestapelt sind.

2. Bremsvorrichtung (1) nach Anspruch 1, wobei der Hitzeschild (25) zumindest einen in Bezug auf eine Mittelachse der Krone geneigten Oberflächenabschnitt (25.1) enthält.

3. Bremsvorrichtung (1) nach Anspruch 2, wobei der geneigte Oberflächenabschnitt (25.1) gekrümmt ist.

4. Bremsvorrichtung (1) nach Anspruch 2, wobei der geneigte Oberflächenabschnitt (25.1) ebenflächig ist.

5. Bremsvorrichtung (1) nach einem der vorhergehenden Ansprüche, wobei der Hitzeschild (25) in einem Stück ausgebildet ist.

6. Bremsvorrichtung (1) nach einem der vorhergehenden Ansprüche, wobei der Hitzeschild (25) Versteifungen (27) umfasst, die zwischen jeder der Öffnungen (26) angeordnet sind.

7. Bremsvorrichtung (1) nach Anspruch 6, wobei es sich bei den Versteifungen (27) um tiefgezogene Rippen handelt.

8. Bremsvorrichtung (1) nach einem der vorhergehenden Ansprüche, wobei der Hitzeschild (25) aus einem wärmeisolierenden Material ausgebildet ist.

9. Bremsvorrichtung (1) nach einem der vorhergehenden Ansprüche, wobei eine dem Kranz zugewandte Fläche des Hitzeschilds (25) mit einem Material mit niedrigem Emissionsgrad beschichtet ist.

10. Bremsvorrichtung (1) nach einem der vorhergehenden Ansprüche, wobei der Hitzeschild (25) am Umfang einen sich zur Krone (15) hin erstreckenden, abfallenden Rand umfasst.

11. Bremsvorrichtung (1) nach einem der vorhergehenden Ansprüche, wobei jede der Öffnungen am Umfang einen sich zum Scheibenstapel hin erstreckenden, abfallenden Rand (29) umfasst.

12. Bremsvorrichtung (1) nach einem der vorhergehenden Ansprüche, wobei der Hitzeschild (25) röhrenförmige Abschnitte (29') umfasst, die sich von einem Rand der Öffnungen zu dem Scheibenstapel hin erstrecken und den Aktor teilweise umgeben, um ihn so vor der von dem Scheibenstapel erzeugten Wärmestrahlung zu schützen.

13. Rad (2) eines Luftfahrzeugs, das mit einer Bremsvorrichtung (1) nach einem der vorhergehenden Ansprüche ausgestattet ist.

14. Luftfahrzeug-Fahrwerk, welches zumindest ein Rad nach Anspruch 13 umfasst.

## Claims

1. Braking device (1) of an aircraft wheel comprising a ring (15) which has a stack of discs and (11) a plurality of cavities (17) in which actuators (18) are fitted to apply a braking force on the stack of discs (11) which extend opposite the ring, the ring being provided with a heat shield (25) which extends opposite a face of the ring directed towards the stack of discs to protect said ring from thermal radiation generated by the stack of discs, the heat shield being provided with holes (26) through which the actuators extend and having a sectional profile formed to reflect the thermal radiation away from the device, **characterised in that** the heat shield is held on the ring (15) by being clamped between the ring and a torsion tube (12) on which the discs (11) of the stack of discs are stacked.

2. Braking device (1) according to claim 1, wherein the heat shield (25) includes at least one inclined surface portion (25.1) with respect to a central axis of the ring.

3. Braking device (1) according to claim 2, wherein the inclined surface portion (25.1) is curved.

4. Braking device (1) according to claim 2, wherein the inclined surface portion (25.1) is flat.

5. Braking device (1) according to any one of the preceding claims, wherein the heat shield (25) is made of one piece.

6. Braking device (1) according to any one of the preceding claims, wherein the heat shield (25) comprises stiffeners (27) arranged between each of the holes (26).

7. Braking device (1) according to claim 6, wherein the stiffeners (27) are stamped ridges.

8. Braking device (1) according to any one of the preceding claims, wherein the heat shield (25) is made of a thermally insulating material.

9. Braking device (1) according to any one of the preceding claims, wherein a face of the heat shield (25) directed towards the ring is coated with a low-emissivity material.

10. Braking device (1) according to any one of the preceding claims, wherein the heat shield (25) comprises, at the periphery, a turned out edge which extends towards the ring (15).

11. Braking device (1) according to any one of the preceding claims, wherein each of the orifices comprises, at the periphery, a turned out edge (29) which extends towards the stack of discs.

12. Braking device (1) according to any one of the preceding claims, wherein the heat shield (25) comprises tubular portions (29') which extend from an edge of the holes towards the stack of discs to partially surround the actuator and to protect it from the thermal radiation generated by said stack of discs.

13. Aircraft wheel (2) provided with a braking device (1) according to any one of the preceding claims.

14. Aircraft landing gear comprising at least one wheel according to claim 13.
